# EUROPEAN PATENT SPECIFICATION

(11) **EP 0 764 689 B1**
(45) Date of publication and mention of the grant of the patent: **30.07.2003**
(21) Application number: 96114883.0
(22) Date of filing: 17.09.1996
(51) Int. Cl.: C08L 33/08

(54) **Polymeric composition having low compression set**
Polymerzusammensetzung mit niedrigem Druckverformungsrest
Composition polymérique à faible rémanence à la compression

(30) Priority: 25.09.1995 US 4245
(43) Date of publication of application: 26.03.1997
(73) Proprietor: Eliokem SAS, 91955 Courtaboeuf Cedex (FR)
(72) Inventor: Ngoc, Hung Dang, 94450 Limeil Brevannes (FR); Nigen, Bernard Louis Marie, 92190 Meudon (FR)
(74) Representative: Ahner, Francis

(56) References cited:
- EP-A- 0 619 328

## Description

### Background of the Invention

Seals for automotive body applications (such as, windows, hoods, trunks and doors) and building applications (such as window glazing gaskets and weather strips) should be dimensional stable, provide low compression set, and offer outstanding sealing characteristics over a broad temperature range. Such seals must be capable of sealing out noise, wind and water, while providing long-term ultraviolet light resistance. At the same time the material used in the seal must offer the degree of flexibility required for the particular application. Window and door weather stripping for automobiles and trucks is a high volume application for such seals. However, seals offering essentially the same characteristics are also needed for sun roof seals, handle gaskets, window spacers, window guides, lock seals, windshield wiper pivot seals and in building applications such as window glazing gaskets and weather seals.

Rubbery blends of polyvinyl chloride (PVC) with a nitrile rubber (NBR) have sometimes been used in seals for automotive body applications. The nitrile rubber is included in such blends as a permanent modifier for the PVC which provides it with a higher degree of flexibility. However, the utilization of standard nitrile rubber in such blends typically results in only moderate compression set characteristics. It is very important for seals to have good compression set characteristics in most applications. For instance, improved resistance to water leaks and wind noise can be attained by utilizing a seal which has low compression set characteristics.

It is known from the teachings of UK Patent Application No. 9214969.9 that low compression set characteristics can be improved by utilizing a technique known as "dynamic vulcanization" via free radical generators, such as azo compounds or organic peroxides. However, this "dynamic vulcanization" technique suffers from the weakness that the azo compounds or organic peroxides required reduce the thermal stability of the polyvinylchloride resin and the ultraviolet light resistance of the nitrile rubber. There is also an increased risk of early crosslinking during processing which leads to scorching and reduced recyclability.

United States Patent 5,362,787 discloses a highly crosslinked nitrile rubber which can be easily blended with PVC to make compositions which have an excellent combination of properties for use in making seals and gaskets for automotive and building applications. The PVC blends made with such highly crosslinked nitrile rubbers offer excellent dispersion behavior, dimensional stability, low compression set, outstanding sealing characteristics, and low temperature flexibility.

United States Patent 5,362,787 more specifically discloses a highly crosslinked nitrile rubber composition which can be blended with polyvinyl chloride to make compositions having excellent characteristics for seals and gaskets including dimensional stability, low compression set, outstanding sealing characteristics, and good low temperature flexibility, said highly crosslinked nitrile rubber composition being comprised of (1) a highly crosslinked nitrile rubber having repeat units which are derived from (a) 1,3-butadiene, (b) acrylonitrile, and (c) a crosslinking agent, wherein said highly crosslinked nitrile rubber has a Mooney viscosity of about 50 to about 120, a swelling index of less than about 10 percent, a mill shrinkage of less than 10 percent, and a gel content of greater than 90 percent; and (2) from 1 to 30 phr of a plasticizer.

US-A- 5,380,785 and US-A- 5,415,940 disclose a rubbery polymer which can be blended with polyvinyl chloride to make leathery compositions having good heat and ultraviolet light resistance, said rubbery polymer being comprised of repeat units which are comprised of (a) butyl acrylate, or optionally a mixture of butyl acrylate and 2-ethylhexyl acrylate containing up to about 40% 2-ethylhexyl acrylate, (b) at least one member selected from the group consisting of methyl methacrylate, ethyl methacrylate, methyl acrylate, and ethyl acrylate, (c) acrylonitrile, (d) styrene, (e) a half ester maleate soap, and (f) a crosslinking agent.

EP-A- 0 619 328 discloses rubbery polymers having repeat units which are comprised of (a) butyl acrylate, or optionally, a mixture of butyl acrylate and 2-ethylhexyl acrylate containing up to about 40% 2-ethylhexyl acrylate, (b) at least one member selected from the group consisting of methyl methacrylate, ethyl methacrylate, methyl acrylate, and ethyl acrylate, (c) acrylonitrile, (d) styrene, (e) a half ester maleate soap, and (f) a crosslinking agent. EP-A- 0 619 328 further discloses that such rubbery polymers can be blended with halogen containing monomers, styrenic polymers, polyolefins, and polyamides to produce compositions that exhibit good heat and ultraviolet light resistance.

### Summary of the Invention

The present invention relates to a polymeric composition which has an excellent combination of properties for use in making seals and gaskets for automotive and building applications, such as window glazing gaskets. These polymeric compositions offer excellent dimensional stability, low compression set, outstanding sealing characteristics, low temperature flexibility, heat resistance, and ultra-violet light resistance.

The present invention more specifically discloses a polymeric composition , a window glazing gasket and a process for making a polymeric composition as defined in the claims.

### Detailed Description of the Invention

The rubbery polymers which are utilized in the polymeric compositions of this invention are described in United States Patent 5,380,785 and United States Patent 5,415,940 which are incorporated herein by reference herein in their entirety. Rubbery polymers of this type are commercially avilable from The Goodyear Tire & Rubber Company and are sold as Sunigum® rubber.

These rubbery polymers are synthesized utilizing a free radical emulsion polymerization technique and are comprised of repeat units which are derived from (a) butyl acrylate, or optionally a mixture of butyl acrylate and 2-ethylhexyl acrylate containing up to about 40% 2-ethylhexyl acrylate, (b) methyl methacrylate, ethyl methacrylate, methyl acrylate, or ethyl acrylate, (c) acrylonitrile, (d) styrene, (e) a half ester maleate soap, and (f) a crosslinking agent. The crosslinking agent is typically a multi-functional acrylate, a multi-functional methacrylate or divinylbenzene.

Technically, these rubbery polymers contain repeat units (chain linkages) which are derived from (a) butyl acrylate, or optionally a mixture of butyl acrylate and 2-ethylhexyl acrylate containing up to about 40% 2-ethylhexyl acrylate, (b) methyl methacrylate, ethyl methacrylate, methyl acrylate, or ethyl acrylate, (c) acrylonitrile, (d) styrene, (e) a half ester maleate soap, and (f) a crosslinking agent. These repeat units differ from the monomers that they were derived from in that they contain one less carbon-carbon double bond than is present in the respective monomer. In other words, a carbon-to-carbon double bond is consumed during the polymerization of the monomer into a repeat unit in the rubbery polymer. Thus, in saying that the rubbery polymer contains various monomers in actuality means that it contains repeat units which are derived from those monomers.

The rubbery polymer will normally contain (a) from about 40 weight percent to about 80 weight percent butyl acrylate, or optionally a mixture of butyl acrylate and 2-ethylhexyl acrylate containing up to 40 weight percent 2-ethylhexyl acrylate, (b) from about 5 weight percent to about 35 weight percent methyl methacrylate, ethyl methacrylate, methyl acrylate, or ethyl acrylate, (c) from about 4 weight percent to about 30 weight percent acrylonitrile, (d) from about 3 weight percent to about 25 weight percent styrene, (e) from about 0.5 weight percent to about 8 weight percent of a half ester maleate soap, and (f) from about 0.25 weight percent to about 8 weight percent of a crosslinking agent.

Such rubbery polymers will preferably contain (a) from about 50 weight percent to about 80 weight percent butyl acrylate, or optionally a mixture of butyl acrylate and 2-ethylhexyl acrylate containing up to about 40% 2-ethylhexyl acrylate, (b) from about 3 weight percent to about 25 weight percent of at least one member selected from the group consisting of methyl methacrylate, ethyl methacrylate, methyl acrylate, and ethyl acrylate, (c) from about 6 weight percent to about 30 weight percent acrylonitrile, (d) from about 5 weight percent to about 18 weight percent styrene, (e) from about 1 weight percent to about 5 weight percent of a half ester maleate soap, and (f) from about 0.5 weight percent to about 4 weight percent of a crosslinking agent.

The rubbery polymer will more preferably be comprised of repeat units which are derived from (a) from about 55 weight percent to about 75 weight percent butyl acrylate, or optionally a mixture of butyl acrylate and 2-ethylhexyl acrylate containing up to about 40% 2-ethylhexyl acrylate, (b) from about 5 weight percent to about 20 weight percent of at least one member selected from the group consisting of methyl methacrylate, ethyl methacrylate, methyl acrylate, and ethyl acrylate, (c) from about 10 weight percent to about 25 weight percent acrylonitrile, (d) from about 8 weight percent to about 14 weight percent styrene, (e) from about 2 weight percent to about 4 weight percent of a half ester maleate soap, and (f) from about 1 weight percent to about 3 weight percent of a crosslinking agent. The percentages reported in this paragraph are based upon the total weight of the rubbery polymer.

The rubbery polymers used in the polymeric compositions of this invention are synthesized in an aqueous reaction mixture by utilizing a free radical polymerization technique. The reaction mixture utilized in this polymerization technique is comprised of water, the appropriate monomers, a suitable free radical initiator, a crosslinking agent, a half ester maleate soap, and a metal salt of an alkyl sulfonate or a metal salt of an alkyl sulfate. The reaction mixture utilized in this polymerization technique will normally contain from about 10 weight percent to about 80 weight percent monomers, based upon the total weight of the reaction mixture. The reaction mixture will preferably contain from about 20 weight percent to about 70 weight percent monomers and will more preferably contain from about 40 weight percent to about 50 weight percent monomers.

The reaction mixtures utilized in carrying out such polymerizations will typically contain from about 0.005 phm (parts per hundred parts of monomer by weight) to about 1 phm of at least one member selected from the group consisting of metal salts of alkyl sulfates and metal salts of alkyl sulfonates. It is generally preferred for the reaction mixture to contain from about 0.008 phm to about 0.5 phm of the metal salt of the alkyl sulfonate or the metal salt of the alkyl sulfate. It is normally more preferred for the reaction mixture to contain from about 0.05 phm to about 0.3 phm of the metal salt of the alkyl sulfonate or the metal salt of the alkyl sulfate.

The free radical polymerization technique utilized in this synthesis is normally initiated by including a free radical initiator in the reaction mixture. Virtually, any type of compound capable of generating free radicals can be utilized as the free radical initiator. The free radical generator is normally employed at a concentration within the range of about 0.01 phm to about 1 phm. The free radical initiators which are commonly used include the various peroxygen compounds such as potassium persulfate, ammonium persulfate, benzoyl peroxide, hydrogen peroxide, di-t-butyl peroxide, dicumyl peroxide, 2,4-dichlorobenzoyl peroxide, decanoyl peroxide, lauryl peroxide, cumene hydroperoxide, p-menthane hydroperoxide, t-butyl hydroperoxide, acetyl peroxide, methyl ethyl ketone peroxide, succinic acid peroxide, dicetyl peroxydicarbonate, t-butyl peroxyacetate, t-butyl peroxymaleic acid, t-butyl peroxybenzoate, acetyl cyclohexyl sulfonyl peroxide, and the like; the various azo compounds such as 2-t-butylazo-2-cyanopropane, dimethyl azodiisobutyrate, azodiisobutylronitrile, 2-t-butylazo-1-cyanocyclohexane, 1-t-amylazo-1-cyanocyclohexane, and the like, the various alkyl perketals, such as 2,2-bis-(t-butyl-peroxy)butane, and the like. Water soluble peroxygen free radical initiators are especially useful in such aqueous polymerizations.

These emulsion polymerizations are typically carried out at the temperature ranging between about 60°F (20°C) and 190°F (88°C). At temperatures above about 88°C alkyl acrylate monomers, such as butyl acrylate, have a tendency to boil. Thus, a pressurized jacket would be required for heating such alkyl acrylate monomers to temperatures in excess of about 88°C. On the other hand, at polymerization temperatures of less than about 55°C a redox initiator system is required to insure satisfactory polymerization rates.

The sulfonate surfactants that are useful in such polymerizations are commercially available from a wide variety of sources. For instance, Du Pont sells sodium alkylarylsulfonate under the tradename Alkanol™, Browning Chemical Corporation sells sodium dodecylbenzene sulfonates under the tradename Ufaryl™ Dl-85, and Ruetgers-Nease Chemical Company sells sodium cumene sulfonate under the tradename Naxonate Hydrotrope™. Some representative examples of sulfonate surfactants which can be used include sodium toluene-xylene sulfonate, sodium toluene sulfonate, sodium cumene sulfonates, sodium decyldiphenylether sulfonate, sodium dodecylbenzenesulfonate, sodium dodecyldiphenylether sulfonate, sodium 1-octane sulfonate, sodium tetradecane sulfonate, sodium pentadecane sulfonate, sodium heptadecane sulfonate, and potassium toluene sulfonate.

Metal salts of alkylbenzene sulfonates are a highly preferred class of sulfonate surfactant. The metal will generally be sodium or potassium with sodium being preferred. Sodium salts of alkylbenzene sulfonates have the structural formula: 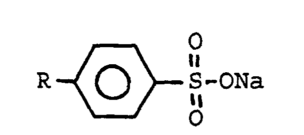 wherein R represents an alkyl group containing from 1 to about 20 carbon atoms. It is preferred for the alkyl group to contain from about 8 to about 14 carbon atoms.

The free radical emulsion polymerization utilized in synthesizing the rubbery polymer is typically conducted at a temperature which is within the range of about 10°C to about 95°C. In most cases, the polymerization temperature utilized will vary between about 20°C and about 80°C. The polymerization is carried out as a two step batch process. In the first step, a seed polymer containing latex is synthesized. This is done by polymerizing (a) butyl acrylate, or optionally a mixture of butyl acrylate and 2-ethylhexyl acrylate containing up to about 40% 2-ethylhexyl acrylate, (b) at least one member selected from the group consisting of methyl methacrylate, ethyl methacrylate, methyl acrylate, and ethyl acrylate, (c) acrylonitrile, and (d) a crosslinking agent.

The seed polymer containing latex is typically prepared by the polymerization of a monomer mixture which contains about 40 to about 90 weight percent butyl acrylate, or optionally a mixture of butyl acrylate and 2-ethylhexyl acrylate containing up to about 40% 2-ethylhexyl acrylate, from about 5 to about 35 weight percent methyl methacrylate, ethyl methacrylate, methyl acrylate, or ethyl acrylate, from about 2 to about 30 weight percent acrylonitrile, and from about 0.25 weight percent to 6 weight percent of the crosslinking agent. It is typically preferred for the monomeric component utilized in the first step to include about 50 weight percent to about 85 weight percent butyl acrylate, or optionally a mixture of butyl acrylate and 2-ethylhexyl acrylate containing up to about 40% 2-ethylhexyl acrylate, from about 5 weight percent to about 30 weight percent ethyl acrylate, ethyl methacrylate, methyl acrylate, or methyl methacrylate, from about 4 weight percent to about 28 weight percent acrylonitrile, and from about 0.5 weight percent to about 4 weight percent of the crosslinking agent. It is generally more preferred for the monomer charge composition used in synthesizing the seed polymer latex to contain from about 60 weight percent to about 80 weight percent butyl acrylate, or optionally a mixture of butyl acrylate and 2-ethylhexyl acrylate containing up to about 40% 2-ethylhexyl acrylate, from about 5 weight percent to about 25 weight percent methyl methacrylate, ethyl methacrylate, methyl acrylate, or ethyl acrylate, from about 5 weight percent to about 25 weight percent acrylonitrile, and from about 1 to about 3 weight percent crosslinking agent.

After the seed polymer latex has been prepared, styrene monomer, additional acrylonitrile monomer, and additional crosslinking agent is added to the seed polymer containing latex. As a general rule, from about 4 parts by weight to about 30 parts by weight of styrene, from about 1 part by weight to about 20 parts by weight of additional acrylonitrile, and from about 0.01 to 2 parts by weight of the crosslinking agent will be added. In this second stage of the polymerization, it is preferred to add from about 6 parts by weight to about 22 parts by weight of styrene, from about 3 parts by weight to about 12 parts by weight of acrylonitrile, and from about 0.05 parts by weight to 1 part by weight of the crosslinking agent. It is typically more preferred for from about 10 parts by weight to about 17 parts by weight of styrene, from about 4 parts by weight to about 8 parts by weight of acrylonitrile, and from about 0.1 parts by weight to about 0.5 parts by weight of the crosslinking agent to be added to the seed polymer latex to initiate the second phase of the polymerization.

A wide variety of crosslinking agents can be utilized in the synthesis of the rubbery polymer. Some representative examples of crosslinking agents which can be utilized include difunctional acrylates, difunctional methacrylates, trifunctional acrylates, trifunctional methacrylates, and divinylbenzene. Some specific examples of crosslinking agents which can be used include ethylene glycol methacrylate, divinylbenzene, and 1,4-butanediol dimethacrylate. In practice 1,4-butanediol dimethacrylate has proven to be particularly useful as the crosslinking agent.

In most cases, the polymerization will be continued until a high monomer conversion has been attained. At this point, the rubbery polymer made by the two step batch polymerization process is recovered from the emulsion (latex). This can be accomplished by utilizing standard coagulation techniques. For instance, coagulation can be accomplished by the addition of salts, acids, or both to the latex.

The half ester maleate soap utilized in the polymerization is prepared by reacting maleic anhydride with a fatty alcohol containing from about 10 to about 24 carbon atoms. It is typically preferred to utilize a fatty alcohol which contains from about 12 to about 16 carbon atoms. One mole of the maleic anhydride is reacted with one mole of the fatty alcohol in producing the half ester maleate soap. This reaction is typically conducted at a temperature which is within the range of about 50°C to about 80°C and can be depicted as follows: 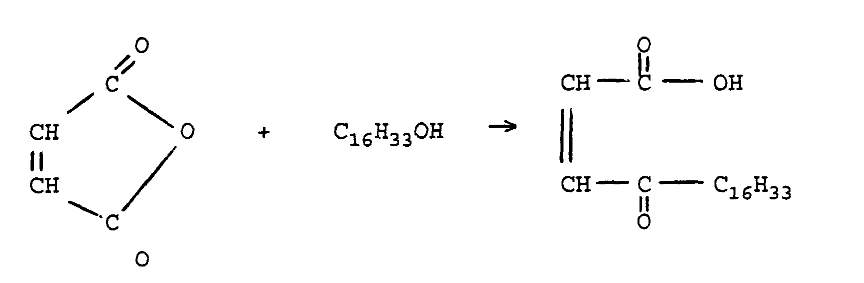 Sodium hydroxide or potassium hydroxide is then typically added to make the half ester maleate soap. This step can be depicted as follows:

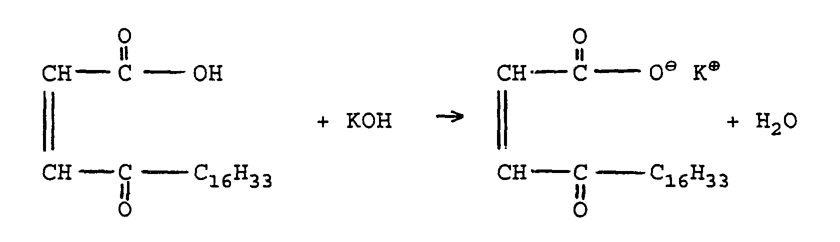

After the rubbery polymer is recovered by coagulation, it is dried. It is sometimes advantageous to convert the rubbery polymer into a powder to facilitate its usage. In this case, it will be beneficial to add a partitioning agent to the rubbery polymer. Some representative examples of partitioning agents which can be employed include calcium carbonate, emulsion polyvinyl chloride, and silica. Calcium carbonate is a highly desirable partitioning agent which can be utilized in such applications.

A wide variety of thermoplastic resins can be employed in the polymeric compositions of this invention. For instance, the thermoplastic resin can be a halogenated thermoplastic resin or it can be a halogen free thermoplastic. Some representative examples of thermoplastic resins which can be utilized include polyvinylchloride (PVC), chlorinated polyethylene, vinylacetate graft polyvinylchloride, butylacetate graft polyvinylchloride, ethylenevinylacetate, ethylenevinylacetate/carbon monoxide copolymer, ethylene/butylacrylate/carbon monoxide terpolymer, polyethylene, polypropylene, ABS resins, acrylonitrile/styrene/acrylonitrile block copolymers (ASA resins), styrene/butadiene/styrene block copolymers (SBS resins), styrene/ethylenebutylene/styrene block terpolymer resins, thermoplastic polyurethane resins, and nylon resins. The ABS resins which can be used are amorphous thermoplastics synthesized by polymerizing acrylonitrile, butadiene, and styrene. ABS resins are normally made by polymerizing 1,3-butadiene monomer into polybutadiene after which styrene and acrylonitrile monomers are added and polymerized (grafted) onto the polybutadiene. PVC resins have proven to be very useful in the practice of this invention.

The epoxide group containing material can be virtually any type of compound or polymer having an -O- bridge therein which is attached to different carbon atoms which are otherwise united. The epoxide group containing material will normally be an epoxy resin. The types of epoxy resins which can be used include bisphenol-A epichlorohydrin resins, halogenated epoxy resins, flexibilizing epoxy resins, aliphatic epoxy resins, and high-functionality epoxy resins.

The polymeric compositions of this invention will normally contain from about 20 weight percent to about 70 weight percent of the rubbery polymer, from about 25 weight percent to about 70 weight percent of the thermoplastic resin, and from about 1 weight percent to about 10 weight percent of the epoxide group containing material. The polymeric composition will more typically contain from about 30 weight percent to about 65 weight percent of the rubbery polymer, from about 30 weight percent to about 65 weight of the thermoplastic resin, and from about 2 weight percent to about 8 weight percent of the epoxide group containing material. The polymeric composition will preferably contain from about 40 weight percent to about 60 weight percent of the rubbery polymer, from about 35 weight percent to about 55 weight of the thermoplastic resin, and from about 3 weight percent to about 6 weight percent of the epoxide group containing material.

The polymeric compositions of this invention are made by mixing the rubbery polymer, the thermoplastic resin, and the epoxide containing material and dynamically vulcanizing them at a elevated temperature. Dynamic vulcanization differs from conventional static vulcanization techniques in that the vulcanization occurs during mixing or mastication of the composition being prepared. Dynamic vulcanization is typically carried out under the high shearing forces necessary for thorough mix the rubbery polymer, the thermoplastic resin, and the epoxy group containing polymer. The dynamic vulcanization is carried out at a temperature which is adequate to vulcanize the blend. This temperature will normally be within the range of about 100°C to about 220°C. In most cases the dynamic vulcanization will be conducted at a temperature which is within the range of about 120°C to about 210°C. It is normally preferred for the dynamic vulcanization to be conducted at a temperature from about 130°C to about 200°C.

This invention is illustrated by the following example which is merely for the purpose of illustration and are not to be regarded as limiting the scope of the invention or the manner in which it can be practiced. Unless specifically indicated otherwise, parts and percentages are given by weight.

### Example 1

In this experiment a polymeric composition having excellent characteristics for seals and gaskets was made utilizing the techniques of this invention. In the procedure used a dry blend containing 100 parts of PVC, 50 parts of dioctylphthalate, 3 parts of a Ba/Zn stabilizer, and 10 parts of Epikote™ 828 epoxy resin was blended at a temperature of 150°C with 148 parts of Sunigum® SNP7395 rubbery polymer in a Haake Rheocord 90 at 50 rpm for 20 minutes. The torque increased from about 850 mg to about 1400 mg which indicates that an in-situ vulcanization reaction took place (dynamic vulcanization). It should be noted that without the Epikote™ 828 resin that the torque only increased from 850 mg to about 1000 mg after maintaining the blend at 150°C for 20 minutes at 50 rpm.

After the dynamic vulcanization was completed, the polymer mixture was fluxed at 180°C for 6 minutes on the mill and molded at 180°C for 10 minutes. The polymeric sample made by this dynamic vulcanization process had a Shore A hardness of 70, a tensile strength of 9.9 MPa, an elongation at break of 189%, a 100% modulus of 6.3 MPa, and a compression set after 24 hours at 70°C of only 49. A sample made without including the Epikote™ 828 epoxy resin had a Shore A hardness of 70, a tensile strength of 7.9 MPa, an elongation at break of 186%, a 100% modulus of 5.5 MPa, and a compression set after 24 hours at 70°C of 62. Thus, this experiment shows that including the epoxy resin in the blend which was dynamically vulcanized greatly improved compression set without sacrificing other physical properties. The polymeric composition made had excellent characteristics for utilization in making seals and gaskets.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A polymeric composition having excellent characteristics for seals and gaskets including dimensional stability, low compression set, and outstanding sealing characteristics, said polymeric composition being **characterized by** being comprised of a vulcanized blend of (1) a rubbery polymer which is comprised of repeat units which are derived from (a) butyl acrylate, (b) at least one member selected from the group consisting of methyl methacrylate, ethyl methacrylate, methyl acrylate, and ethyl acrylate, (c) acrylonitrile, (d) styrene, (e) a half ester maleate soap, and (f) a crosslinking agent; (2) at least one thermoplastic resin; and (3) at least one epoxy resin.

2. A polymeric composition as specified in claim 1 **characterized in that** the thermoplastic resin is polyvinylchloride.

3. A polymeric composition as specified in claim 1 or 2 **characterized in that** the rubbery polymer is comprised of repeat units which are derived from 40 to 80 weight percent butylacrylate, from 5 to 35 weight percent of a member selected from the group consisting of methyl methacrylate, ethyl methacrylate, methyl acrylate, and ethyl acrylate, from 4 to 30 weight percent acrylonitrile, from 3 to 25 weight percent styrene, from 0.5 to 8 weight percent half ester maleate soap, and from 0.25 to 8 weight percent crosslinking agent.

4. A polymeric composition as specified in claim 1 or 2 **characterized in that** the rubbery polymer is further comprised of repeat units which are derived from 2-ethylhexyl acrylate and wherein the rubbery polymer contains repeat units which are derived from 50 to 80 weight percent butylacrylate, or optionally a mixture of butyl acrylate and 2-ethylhexyl acrylate containing up to 40% 2-ethylhexyl acrylate, from 3 to 25 weight percent of a member selected from the group consisting of methyl methacrylate, ethyl methacrylate, methyl acrylate and ethyl acrylate, from 6 to 25 weight percent acrylonitrile, from 5 to 18 weight percent styrene, from 1 to 5 weight percent half ester maleate soap, and from 0.5 to 4 weight percent crosslinking agent.

5. A polymeric composition as specified in claim 1 or 2 **characterized in that** the rubbery polymer is further comprised of repeat units which are derived from 2-ethylhexyl acrylate and wherein the rubbery polymer is comprised of repeat units which are derived from 55 to 75 weight percent butyl acrylate, or optionally a mixture of butyl acrylate and 2-ethylhexyl acrylate containing up to 40% 2-ethylhexyl acrylate, from 5 to 20 weight percent methylmethacrylate, from 10 to 14 weight percent acrylonitrile, from 8 to 14 weight percent styrene, from 2 to 4 weight percent half ester maleate soap, and from 1 to 3 weight percent crosslinking agent.

6. A polymeric composition as specified in any of the preceding claims **characterized in that** the crosslinking agent is one or more members selected from the group consisting of divinylbenzene and 1,4-butanediol dimethacrylate.

7. A polymeric composition as specified in any of the preceding claims **characterized in that** the blend is comprised of 30 weight percent to 65 weight percent of the rubbery polymer, from 30 weight percent to 65 weight of the thermoplastic resin, and from 2 weight percent to 8 weight percent of the epoxide group containing material.

8. A window glazing gasket which is **characterized by** being comprised of a vulcanized blend of (1) a rubbery polymer which is comprised of repeat units which are derived from (a) butyl acrylate, (b) at least one member selected from the group consisting of methyl methacrylate, ethyl methacrylate, methyl acrylate, and ethyl acrylate, (c) acrylonitrile, (d) styrene, (e) a half ester maleate soap, and (f) a crosslinking agent; (2) at least one thermoplastic resin; and (3) at least one epoxy resin.

9. A process for making a polymeric composition having excellent characteristics for seals and gaskets including dimensional stability, low compression set, and outstanding sealing characteristics, said process being **characterized by** dynamically vulcanizing (1) a rubbery polymer which is comprised of repeat units which are derived from (a) butyl acrylate, (b) at least one member selected from the group consisting of methyl methacrylate, ethyl methacrylate, methyl acrylate, and ethyl acrylate, (c) acrylonitrile, (d) styrene, (e) a half ester maleate soap, and (f) a crosslinking agent; (2) at least one thermoplastic resin; and (3) at least one epoxy resin; wherein said dynamic vulcanization is conducted at an elevated temperature which is within the range of 100°C to 220°C under conditions of shear.

10. A process as specified in claim 9 **characterized in that** said process is carried out at a temperature which is within the range of 120°C to 210°C; wherein the thermoplastic resin is polyvinylchloride.

## Patentansprüche

1. Polymerzusammensetzung mit ausgezeichneten Eigenschaften für Verschlüsse und Dichtungen, einschließlich Dimensionsstabilität, niedrigem Druckverformungsrest und hervorragenden Dichtungseigenschaften, wobei die Polymerzusammensetzung **dadurch gekennzeichnet ist, daß** sie eine vulkanisierte Mischung von (1) einem gummielastischen Polymer, welches Struktureinheiten umfaßt, die von (a) Butylacrylat, (b) mindestens einem Vertreter, welcher aus der aus Methylmethacrylat, Ethylmethacrylat, Methylacrylat und Ethylacrylat bestehenden Gruppe ausgewählt ist, (c) Acrylnitril, (d) Styrol, (e) einer Maleat-Halbester-Seife und (f) einem Vernetzungsmittel abgeleitet sind, (2) mindestens einem thermoplastischen Harz und (3) mindestens einem Epoxyharz umfaßt.

2. Polymerzusammensetzung nach Anspruch 1, **dadurch gekennzeichnet, daß** das thermoplastische Harz Polyvinylchlorid ist.

3. Polymerzusammensetzung nach Anspruch 1 oder 2, **dadurch gekennzeichnet, daß** das gummielastische Polymer Struktureinheiten umfaßt, die von 40 bis 80 Gew.-% Butylacrylat, 5 bis 35 Gew.-% eines Vertreters, welcher aus der aus Methylmethacrylat, Ethylmethacrylat, Methylacrylat und Ethylacrylat bestehenden Gruppe ausgewählt ist, 4 bis 30 Gew.-% Acrylnitril, 3 bis 25 Gew.-% Styrol, 0,5 bis 8 Gew.-% Maleat-Halbester-Seife und 0,25 bis 8 Gew.-% Vernetzungsmittel abgeleitet sind.

4. Polymerzusammensetzung nach Anspruch 1 oder 2, **dadurch gekennzeichnet, daß** das gummielastische Polymer ferner Struktureinheiten umfaßt, die von 2-Ethylhexylacrylat abgeleitet sind, und wobei das gummielastische Polymer Struktureinheiten umfaßt, die von 50 bis 80 Gew.-% Butylacrylat oder gegebenenfalls einer Mischung von Butylacrylat und 2-Ethylhexylacrylat, die bis zu 40 % 2-Ethylhexylacrylat enthält, 3 bis 25 Gew.-% eines Vertreters, welcher aus der aus Methylmethacrylat, Ethylmethacrylat, Methylacrylat und Ethylacrylat bestehenden Gruppe ausgewählt ist, 6 bis 25 Gew.-% Acrylnitril, 5 bis 18 Gew.-% Styrol, 1 bis 5 Gew.-% Maleat-Halbester-Seife und 0,5 bis 4 Gew.-% Vernetzungsmittel abgeleitet sind.

5. Polymerzusammensetzung nach Anspruch 1 oder 2, **dadurch gekennzeichnet, daß** das gummielastische Polymer ferner Struktureinheiten umfaßt, die von 2-Ethylhexylacrylat abgeleitet sind, und wobei das gummielastische Polymer Struktureinheiten umfaßt, die von 55 bis 75 Gew.-% Butylacrylat oder gegebenenfalls einer Mischung von Butylacrylat und 2-Ethylhexylacrylat, die bis zu 40 % 2-Ethylhexylacrylat enthält, 5 bis 20 Gew.-% Methylmethacrylat, 10 bis 14 Gew.-% Acrylnitril, 8 bis 14 Gew.-% Styrol, 2 bis 4 Gew.-% Maleat-Halbester-Seife und 1 bis 3 Gew.-% Vernetzungsmittel abgeleitet sind.

6. Polymerzusammensetzung nach irgendeinem der vorhergehenden Ansprüche, **dadurch gekennzeichnet, daß** es sich bei dem Vernetzungsmittel um einen oder mehrere Vertreter, welche(r) aus der aus Divinylbenzol und 1,4-Butandioldimethacrylat bestehenden Gruppe ausgewählt ist/sind, handelt.

7. Polymerzusammensetzung nach irgendeinem der vorhergehenden Ansprüche, **dadurch gekennzeichnet, daß** die Mischung 30 Gew.-% bis 65 Gew.-% des gummielastischen Polymers, 30 Gew.-% bis 65 Gew.-% des thermoplastischen Harzes und 2 Gew.-% bis 8 Gew.-% des Epoxygruppe-enthaltenden Materials umfaßt.

8. Fensterglasdichtung, welche **dadurch gekennzeichnet ist, daß** sie eine vulkanisierte Mischung von (1) einem gummielastischen Polymer, das Struktureinheiten umfaßt, die von (a) Butylacrylat, (b) mindestens einem Vertreter, welcher aus der aus Methylmethacrylat, Ethylmethacrylat, Methylacrylat und Ethylacrylat bestehenden Gruppe ausgewählt ist, (c) Acrylnitril, (d) Styrol, (e) einer Maleat-Halbester-Seife und (f) einem Vernetzungsmittel abgeleitet sind, (2) mindestens einem thermoplastischen Harz und (3) mindestens einem Expoxyharz umfaßt.

9. Verfahren zur Herstellung einer Polymerzusammensetzung mit ausgezeichneten Eigenschaften für Verschlüsse und Dichtungen, einschließlich Dimensionsstabilität, niedrigem Druckverformungsrest und hervorragenden Dichtungseigenschaften, wobei das Verfahren **gekennzeichnet ist durch** die dynamische Vulkanisierung von (1) einem gummielastischen Polymer, welches Struktureinheiten umfaßt, die von (a) Butylacrylat, (b) mindestens einem Vertreter, welcher aus der aus Methylmethacrylat, Ethylmethacrylat, Methylacrylat und Ethylacrylat bestehenden Gruppe ausgewählt ist, (c) Acrylnitril, (d) Styrol, (e) einer Maleat-Halbester-Seife und (f) einem Vernetzungsmittel abgeleitet sind, (2) mindestens einem thermoplastischen Harz und (3) mindestens einem Epoxyharz; wobei die dynamische Vulkanisierung bei einer erhöhten Temperatur, welche innerhalb des Bereichs von 100° C bis 220° C liegt, unter Scherbedingungen durchgeführt wird.

10. Verfahren nach Anspruch 9, **dadurch gekennzeichnet, daß** das Verfahren bei einer Temperatur durchgeführt wird, welche innerhalb des Bereichs von 120° C bis 210° C liegt, wobei das thermoplastische Harz Polyvinylchlorid ist.

## Revendications

1. Composition polymère douée d'excellentes propriétés pour joints et éléments d'étanchéité, notamment une stabilité dimensionnelle, une faible déformation sous pression, et des propriétés d'étanchéité exceptionnelles, ladite composition polymère étant **caractérisée en ce qu'**elle est constituée d'un mélange vulcanisé (1) d'un polymère caoutchouteux qui est constitué de motifs dérivés de (a) l'acrylate de butyle, (b) d'au moins un composant choisi parmi le groupe consistant en le méthacrylate de méthyle, le méthacrylate d'éthyle, l'acrylate de méthyle, et l'acrylate d'éthyle, (c) l'acrylonitrile, (d) le styrène, (e) un savon à base de demi-ester de maléate et (f) un agent réticulant; (2) d'au moins une résine thermoplastique; et (3) d'au moins une résine époxy.

2. Composition polymère selon la revendication 1, **caractérisée en ce que** la résine thermoplastique est le polychlorure de vinyle.

3. Composition polymère selon la revendication 1 ou la revendication 2 **caractérisée en ce que** le polymère caoutchouteux est constitué de motifs dérivés à raison de 40 à 80% en poids de acrylate de butyle, de 5 à 35% en poids d'un composant choisi dans le groupe consistant en le méthacrylate de méthyle, le méthacrylate d'éthyle, l'acrylate de méthyle, et l'acrylate d'éthyle, de 4 à 30% en poids d'acrylonitrile, de 3 à 25% en poids de styrène, de 0,5 à 8% poids de savon à base de demi-ester de maléate, et de 0,25 à 8% en poids d'agent réticulant.

4. Composition polymère selon la revendication 1 ou la revendication 2 **caractérisée en ce que** le polymère caoutchouteux est constitué en outre de motifs qui dérivent de l'acrylate de 2-éthylhexyle et dans laquelle le polymère caoutchouteux contient des motifs qui dérivent à raison de 50 à 80% en poids d'acrylate de butyle, ou éventuellement d'un mélange d'acrylate de butyle et d'acrylate de 2-éthylhexyle contenant jusqu'à 40% d'acrylate de 2-éthylhexyle, de 3 à 25% en poids d'un composant choisi dans le groupe consistant en le méthacrylate de méthyle, le méthacrylate d'éthyle, l'acrylate de méthyle et l'acrylate d'éthyle, de 6 à 25% en poids d'acrylonitrile, de 5 à 18% en poids de styrène, de 1 à 5% en poids de savon à base de demi-ester maléate, et de 0,5 à 4% en poids d'agent réticulant.

5. Composition polymère telle que définie à la revendication 1 ou la revendication 2, **caractérisée en ce que** le polymère caoutchouteux est constitué en outre de motifs qui dérivent d'acrylate de 2-éthylhexyle et dans lequel le polymère caoutchouteux est constitué de motifs qui dérivent à raison de 55 à 75% en poids d'acrylate de butyle, ou éventuellement d'un mélange d'acrylate de butyle et d'acrylate de 2-éthylhexyle contenant jusqu'à 40% d'acrylate de 2-éthylhexyle, de 5 à 20% en poids de méthacrylate de méthyle, de 10 à 14% en poids d'acrylonitrile, de 8 à 14% de styrène, de 2 à 4% en poids de savon à base de demi-ester de maléate, et de 1 à 3% en poids d'agent réticulant.

6. Composition polymère telle que définie dans l'une quelconque des revendications précédentes **caractérisée en ce que** l'agent réticulant est un ou plusieurs composants choisis dans le groupe consistant en le divinylbenzène et le diméthacrylate de 1, 4-butandiol.

7. Composition polymère telle que définie dans l'une quelconque des revendications précédentes **caractérisée en ce que** le mélange est constitué à raison de 30% en poids à 65% en poids de polymère caoutchouteux, de 30% en poids à 65% en poids de résine thermoplastique, et de 2% en poids à 8% en poids de substances à groupes époxyde.

8. Joint de vitrage qui est **caractérisé en ce qu'**il est constitué d'un mélange vulcanisé (1) d'un polymère caoutchouteux qui est constitué de motifs qui dérivent (a) de l'acrylate de butyle (b) d'au moins un composant choisi dans le groupe consistant en le méthacrylate de méthyle, le méthacrylate d'éthyle, l'acrylate de méthyle, et l'acrylate d'éthyle, (c) de l'acrylonitrile, (d) du styrène, (e) d'un savon à base de demi-ester maléate et (f) d'un agent réticulant; (2) d'au moins une résine thermoplastique; et (3) au moins une résine époxy.

9. Procédé de production d'une composition polymère douée d'excellentes caractéristiques pour les joints et éléments d'étanchéité, notamment une stabilité dimensionnelle, une faible déformation sous pression, et des propriétés d'étanchéité exceptionnelles, ledit procédé étant **caractérisé en ce qu'**il y a vulcanisation dynamique (1) d'un polymère caoutchouteux qui est constitué de motifs qui dérivent de (a) de l'acrylate de butyle, (b) d'au moins un composant choisi dans le groupe consistant en le méthacrylate de méthyle, le méthacrylate d'éthyle, l'acrylate d'éthyle, l'acrylate de méthyle, et l'acrylate d'éthyle, (c) de l'acrylonitrile, (d) du styrène, (e) d'un savon à base de demi-ester maléate, et (f) d'un agent réticulant; (2) d'au moins une résine thermoplastique; et (3) d'au moins une résine époxy; dans laquelle ladite vulcanisation dynamique est conduite à température élevée qui s'échelonne de 100° à 220°C en opérant sous cisaillement.

10. Procédé tel que défini à la revendication 9 **caractérisé en ce que** ledit procédé est exécuté à une température comprise entre 120°C et 210°C, dans lequel la résine thermoplastique est le polychlorure de vinyle.
